# EUROPÄISCHE PATENTSCHRIFT

(11) **EP 1 433 215 B1**
(45) Veröffentlichungstag und Bekanntmachung des Hinweises auf die Patenterteilung: **06.08.2008**
(21) Anmeldenummer: 02772301.4
(22) Anmeldetag: 13.09.2002
(51) Int. Cl.: H01M 8/04

(54) **BRENNSTOFFZELLENBLOCK**
FUEL-CELL STACK
BLOC DE PILES A COMBUSTIBLE

(30) Priorität: 27.09.2001 EP 01123171
(43) Veröffentlichungstag der Anmeldung: 30.06.2004
(73) Patentinhaber: SIEMENS AKTIENGESELLSCHAFT, 80333 München (DE)
(72) Erfinder: HARTNACK, Herbert, 91056 Erlangen (DE); LERSCH, Josef, 91336 Heroldsbach (DE); MATTEJAT, Arno, 91088 Bubenreuth (DE)
(86) Internationale Anmeldenummer: PCT/EP2002/010315
(87) Internationale Veröffentlichungsnummer: WO 2003/030287

(56) Entgegenhaltungen:
- EP-A- 0 591 800
- WO-A-00/10209
- WO-A-00/41261
- WO-A-01/48849
- US-A- 5 858 569
- PATENT ABSTRACTS OF JAPAN vol. 1996, no. 09, 30. September 1996 (1996-09-30) -& JP 08 138704 A (TOYOTA MOTOR CORP), 31. Mai 1996 (1996-05-31)
- PATENT ABSTRACTS OF JAPAN vol. 1998, no. 11, 30. September 1998 (1998-09-30) -& JP 10 172592 A (HONDA MOTOR CO LTD), 26. Juni 1998 (1998-06-26)
- PATENT ABSTRACTS OF JAPAN vol. 1996, no. 04, 30. April 1996 (1996-04-30) -& JP 07 326376 A (MITSUBISHI HEAVY IND LTD), 12. Dezember 1995 (1995-12-12)
- PATENT ABSTRACTS OF JAPAN vol. 018, no. 414 (E-1587), 3. August 1994 (1994-08-03) -& JP 06 124722 A (MITSUBISHI HEAVY IND LTD), 6. Mai 1994 (1994-05-06)
- PATENT ABSTRACTS OF JAPAN vol. 1997, no. 08, 29. August 1997 (1997-08-29) -& JP 09 092308 A (FUJI ELECTRIC CO LTD), 4. April 1997 (1997-04-04)
- PATENT ABSTRACTS OF JAPAN vol. 1997, no. 12, 25. Dezember 1997 (1997-12-25) -& JP 09 204924 A (TANAKA KIKINZOKU KOGYO KK), 5. August 1997 (1997-08-05)

## Beschreibung

Die Erfindung bezieht sich auf einen Brennstoffzellenblock mit einem Stapel planarer Brennstoffzellen und einem Stapel planarer Befeuchtungszellen, wobei die Befeuchtungszellen jeweils einen Gasraum, einen Befeuchtungswasserraum und eine zwischen den beiden Räumen angeordnete wasserdurchlässige Membran umfassen.

In einer Brennstoffzelle wird durch die elektrochemische Verbindung von Wasserstoff (H₂) und Sauerstoff (O₂) an einem Elektrolyten zu Wasser (H₂O) elektrischer Strom mit hohem Wirkungsgrad erzeugt und dies auch ohne Emission von Schadstoffen und Kohlendioxid (CO₂) wenn als Brenngas reiner Wasserstoff eingesetzt wird. Die technische Umsetzung dieses Prinzips der Brennstoffzelle hat zu unterschiedlichen Lösungen, und zwar mit verschiedenen Elektrolyten und Betriebstemperaturen zwischen 60°C und 1000°C geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Eine einzelne Brennstoffzelle liefert eine Betriebsspannung von maximal etwa 1,1 V. Daher wird eine Vielzahl von Brennstoffzellen zu einem Brennstoffzellenstapel aufeinandergestapelt, der Bestandteil des Brennstoffzellenblocks ist. Durch das In-Reihe-Schalten der Brennstoffzellen des Brennstoffzellenblocks kann die Betriebsspannung eines Brennstoffzellenblocks 100 V und mehr betragen.

Eine planare Brennstoffzelle umfasst einen flachen Elektrolyten, an dessen eine flache Seite eine flache Anode und an dessen andere flache Seite eine ebenfalls flache Kathode grenzt. Diese beiden Elektroden bilden zusammen mit dem Elektrolyten eine sogenannte Elektrolyt-Elektroden-Einheit. Angrenzend an die Anode ist ein Anodengasraum und angrenzend an die Kathode ein Kathodengasraum angeordnet. Zwischen dem Anodengasraum einer Brennstoffzelle und dem Kathodengasraum einer dieser Brennstoffzelle benachbarten Brennstoffzelle ist eine Verbundleiterplatte angeordnet. Die Verbundleiterplatte stellt eine elektrische Verbindung zwischen der Anode der erstgenannten Brennstoffzelle und der Kathode der zweitgenannten Brennstoffzelle her. In Abhängigkeit von der Art der Brennstoffzelle ist die Verbundleiterplatte beispielsweise als eine einzelne metallische Platte oder als ein Kühlelement ausgestaltet, das zwei aufeinander gestapelte Platten mit einem dazwischenliegenden Kühlwasserraum umfasst. Je nach Ausführungsform der Brennstoffzellen befinden sich in einem Brennstoffzellenstapel weitere Bauelemente, wie beispielsweise elektrisch leitende Schichten, Dichtungen oder Druckkissen.

Die Brennstoffzellen eines Brennstoffzellenblocks werden während ihres Betriebs mit Betriebsgasen - also einem wasserstoffhaltigen Brenngas und einem sauerstoffhaltigen Oxidationsgas - versorgt. Manche Ausführungsformen von Niedertemperatur-Brennstoffzellen, insbesondere Brennstoffzellen mit einer Polymer-Elektrolyt-Membran (PEM-Brennstoffzellen), benötigen zum Betrieb befeuchtete Betriebsgase. Diese Betriebsgase werden in einer geeigneten Einrichtung, wie beispielsweise einem Flüssigkeitsringverdichter oder einem Membranbefeuchter, mit Wasserdampf gesättigt.

Werden die Betriebsgase durch lange Betriebsgaszuleitungen vom Befeuchter zum Brennstoffzellenblock geleitet, so kann auf diesem Weg die Temperatur eines befeuchteten Betriebsgases durch Verlust von Wärme an die Umgebung sinken. Dies führt zur Kondensation von Befeuchtungswasser. Die Betriebsgase werden anschließend in den Brennstoffzellen wieder aufgeheizt, wodurch sich ihre relative Feuchtigkeit verringert. Hierdurch wird der stets feucht zu haltende und extrem trockenheitsempfindliche Elektrolyt geschädigt, dessen Lebensdauer sich somit verringert. Es ist daher wünschenswert, dass der Befeuchter möglichst nahe an den Brennstoffzellen angeordnet ist.

Aus den Patentschriften US 5,200,278 und US 5,382,478 ist ein Brennstoffzellenblock mit einem Stapel aus planaren Brennstoffzellen und einem Stapel aus planaren Befeuchtungszellen bekannt. Beide Stapel sind unmittelbar benachbart im Brennstoffzellenblock angeordnet. Die Befeuchtungszellen sind als Membranbefeuchter mit einem Betriebsgasraum, einem Befeuchtungswasserraum und einer zwischen den beiden Räumen angeordneten wasserdurchlässigen Membran ausgeführt. Bevor die Betriebsgase den Brennstoffzellen des Brennstoffzellenstapels zugeleitet werden, durchströmen sie die Befeuchtungszellen, werden dort befeuchtet und strömen anschließend ohne den Brennstoffzellenblock wieder zu verlassen in den Brennstoffzellenstapel.

In den Befeuchtungszellen werden die Betriebsgase mit Hilfe des Kühlwassers aus den Brennstoffzellen befeuchtet. Das auf die Temperatur der Brennstoffzellen aufgeheizte Kühlwasser strömt durch den Befeuchtungswasserraum, durchdringt die wasserdurchlässige Membran und befeuchtet das Betriebsgas auf annähernd 100%-igen Befeuchtungsgrad. Durch die Verdampfung des Befeuchtungswassers von der Membran in den Gasraum hinein wird jedoch Wärme aus dem Betriebsgas als Verdampfungswärme verbraucht. Hierdurch sinkt die Temperatur des den Gasraum durchströmenden Betriebsgases in erheblichem Umfang. Das in den Befeuchtungszellen auf annähernd 100% befeuchtete Betriebsgas wird daher in den Brennstoffzellen erneut aufgeheizt, wodurch sich der Befeuchtungsgrad des Betriebsgases senkt und der Elektrolyt angegriffen wird.

Es ist die Aufgabe der vorliegenden Erfindung, einen Brennstoffzellenblock anzugeben, mit dem eine nahezu 100%-ige Befeuchtung der Betriebsgase bezogen auf das Temperaturniveau der Brennstoffzellen möglich ist.

Diese Aufgabe wird durch einen Brennstoffzellenblock gemäß Anspruch 1 gelöst, bei dem erfindungsgemäß jede der Befeuchtungszellen ein dem Gasraum benachbartes planares Heizelement umfasst.

Das Heizelement ist so ausgestaltet, dass das Betriebsgas während des Befeuchtungsvorgangs am Heizelement entlang strömen kann. Das Betriebsgas wird dabei trotz Abgabe von Verdampfungswärme auf annähernd die Temperatur der Brennstoffzellen des Brennstoffzellenblocks gebracht oder dort gehalten. Hierdurch wird das Betriebsgas bei Eintritt in die Brennstoffzellen nicht wesentlich erwärmt und der 100%-ige Befeuchtungsgrad bleibt erhalten.

Das Heizelement wird in besonders einfacher Weise auf die Temperatur der Brennstoffzellen gebracht indem es von Kühlwasser aus den Brennstoffzellen durchströmt wird. Hierzu weist der Brennstoffzellenblock eine Kühlwasserleitung oder einen Kühlwasserkanal von den Brennstoffzellen zu den Heizelementen der Befeuchtungszellen auf. Das Kühlwasser wird während des Durchströmens der Brennstoffzellen auf die Temperatur der Brennstoffzellen aufgeheizt. Beim Durchströmen des Kühlwassers durch das Heizelement wird das an dem Heizelement entlangstreichende Betriebsgas auf annähernd die Temperatur der Brennstoffzellen gebracht. Das weitere Aufheizen des Betriebsgases bei Eintritt in die Brennstoffzellen ist so gering, dass die hierdurch bedingte Auskondensation von Befeuchtungswasser den Betrieb und die Lebensdauer des Elektrolyten nicht beeinträchtigt. Durch die Verwendung des Kühlwassers aus den Brennstoffzellen als Heizwasser in den Befeuchtungszellen wird nicht nur ein von extern gespeister Heizwasserkreislauf eingespart. Es wird auch eine weitgehend automatische Einstellung der Heizwassertemperatur und damit der Temperatur des Betriebsgases auf die Temperatur der Brennstoffzellen erreicht.

In besonders einfacher Weise kann die Temperatur des Befeuchtungswassers an die der Brennstoffzellen angepasst werden, wenn ein Teil des Kühlwassers aus den Brennstoffzellen als Heizwasser für das Heizelement und ein anderer Teil des Kühlwassers als Befeuchtungswasser in den Befeuchtungselementen verwendet wird. Hierfür weist der Brennstoffzellenblock zweckmäßigerweise Kühlwasserleitungen oder Kühlwasserkanäle von den Kühlelementen der Brennstoffzellen zu den Heizelementen und den Befeuchtungswasserräumen der Befeuchtungselemente auf.

Ein besonders platzsparendes Heizelement umfasst zwei Metallbleche, zwischen denen ein Heizwasserraum angeordnet ist. Durch die zusätzliche Einführung des Heizelements in jede Befeuchtungszelle des Brennstoffzellenblocks wird das Volumen des Befeuchtungszellenstapels und somit des Brennstoffzellenblocks in nicht unerheblichem Umfang vergrößert. Niedertemperatur-Brennstoffzellen und insbesondere PEM-Brennstoffzellen werden jedoch in der Regel in Fahrzeugen oder in kleinen Geräten wie beispielsweise einem Handy oder einem Laptop verwendet. Die Vergrößerung des Volumens des Brennstoffzellenblocks durch Einführung der Heizelemente sollte daher so gering wie möglich ausfallen. Ein zwei Metallbleche umfassendes Heizelement, zwischen denen ein Heizwasserraum angeordnet ist, kann sehr dünn ausgeführt werden. Hierdurch behält der Brennstoffzellenblock seine hohe Leistungsdichte.

Zweckmäßigerweise ist das Heizelement zwischen dem Gasraum einer Befeuchtungszelle und dem Befeuchtungswasserraum einer dieser Befeuchtungszelle benachbarten Befeuchtungszelle angeordnet. Hierdurch wird nicht nur das Betriebsgas durch das Heizelement aufgeheizt, sondern auch das Befeuchtungswasser, welches ebenfalls am Heizelement entlang strömt, auf annähernd der Temperatur der Brennstoffzellen gehalten.

Eine besonders einfache Konstruktion einer sehr flachen Befeuchtungszelle wird dadurch erreicht, dass eines der Metallbleche eine Prägestruktur aufweist, die den Gasraum bildet und das andere der Metallbleche eine Prägestruktur aufweist, die den Befeuchtungswasserraum bildet. Eine solche Prägestruktur wird beispielsweise durch runde hügelförmige Erhebungen und Vertiefungen erreicht, um die während des Betriebs der Befeuchtungszelle auf der einen Seite des Bleches das Betriebsgas bzw. das Befeuchtungswasser fließt und auf der anderen Seite das Heizwasser entlang strömt. Die wasserdurchlässige Membran liegt hierbei zweckmäßigerweise direkt an der Prägestruktur an. Ein Prägestruktur weist außerdem den Vorteil auf, dass sie im Gegensatz zu eingefrästen Stegen oder Kanälen keine scharfen Kanten aufweist, die die weiche und mechanisch empfindliche Membran beschädigen.

Besonders preisgünstig kann der Brennstoffzellenblock hergestellt werden, wenn die Brennstoffzellen jeweils ein Kühlelement umfassen, das in Aufbau und Form mit dem Heizelement identisch ist. Dadurch, dass gleich geformte Elemente für das Kühlelement und das Heizelement eingesetzt werden, wird die Herstellung dieser Elemente und ihre Montage zum Brennstoffzellenblock vereinfacht und ist somit preisgünstiger. Durch den gleichen Aufbau der Elemente wird die Montage des Brennstoffzellenblocks erleichtert und somit verbilligt.

Ein weiterer Vorteil wird dadurch erreicht, dass das Heizelement und das Kühlelement aus einem oder mehreren gleichen Materialien sind. Das Kühlelement einer Brennstoffzelle und das Heizelement einer Befeuchtungszelle unterliegen während des Betriebs des Brennstoffzellenblocks den gleichen Anforderungen: Sie müssen mechanisch ausreichend stabil sein, um dem Brennstoffzellenblock eine nötige Stabilität zu verleihen und sie müssen ausreichend chemisch stabil sein, da sie während des Betriebs von chemisch sehr aggressiven Gasen, wie beispielsweise befeuchtetem reinen Sauerstoff oder befeuchtetem reinen Wasserstoff umströmt werden. Die gleichen Anforderungen gestatten eine gleiche Materialwahl, wodurch sich die Herstellung des Heizelements und des Kühlelements verbilligt. Heizelement und Kühlelement können aus einem gleichen Material sein, wie beispielsweise aus einer metallischen Legierung oder sie können aus mehreren gleichen Materialien gefertigt sein, wie beispielsweise aus einem elektrisch leitenden Kunststoff mit einer oder mehreren metallischen Beschichtungen.

Zweckmäßigerweise weist das Kühlelement eine gegenüber dem Heizelement zusätzliche metallische Beschichtung auf. Das Kühlelement dient - im Gegensatz zum Heizelement aus der Befeuchtungszelle - auch als Verbundleiterplatte, also als elektrische Verbindung zwischen der Anode einer Brennstoffzelle und der Kathode einer benachbarten Brennstoffzelle. Eine solche Kontaktierung lässt sich besonders leicht durch eine metallische Beschichtung beispielsweise aus einem Edelmetall erreichen. Bei der Herstellung des Heizelements kann auf eine solche zusätzliche Beschichtung verzichtet werden, wodurch sich die Herstellungskosten des Heizelements reduzieren lassen.

Eine Vereinfachung der Planung, Gestaltung, Herstellung und Montage des Brennstoffzellenblocks lässt sich dadurch erreichen, dass die äußere Form und die äußeren Abmessungen der Brennstoffzellen identisch sind mit der Form und den Abmessungen der Befeuchtungszellen. Die Herstellung von Brennstoffzellen und Befeuchtungszellen ist somit standardisierbar. Außerdem vereinfacht sich der Aufbau des Brennstoffzellenblocks hierdurch, da die die Zellen umgebenden Bauelemente eines Brennstoffzellenblocks, wie beispielsweise Zuganker, Verrohrungen oder eine Hülle um den Brennstoffzellenblock, nicht an verschiedene Größen von Befeuchtungszellen und Brennstoffzellen anzupassen sind.

Vorteilhafterweise ist das Heizelement und das Kühlelement entlang seiner äußeren Kanten von jeweils einem Rahmen aus gleichem Material eingefasst. Der Rahmen verbindet die Brennstoffzellen bzw. die Befeuchtungszellen miteinander und dichtet den Brennstoffzellenblock nach außen hin ab. An das Material dieser Rahmen ist sowohl in den Brennstoffzellen wie auch in den Befeuchtungszellen die gleichen Anforderungen gestellt. Daher ist es zweckmäßig, das Dichtungsmaterial um das Heizelement gleich zu wählen wie das Dichtmaterial um das Kühlelement.

Ausführungsbeispiele der Erfindung werden anhand von acht Figuren näher erläutert. Es zeigen:
- FIG 1: eine Draufsicht auf eine aufgeschnitten dargestellte Befeuchtungszelle;
- FIG 2: einen Schnitt durch die Befeuchtungszelle aus FIG 1;
- FIG 3: einen weiteren Schnitt durch die Befeuchtungszelle;
- FIG 4: einen weiteren Schnitt durch die Befeuchtungszelle.
- FIG 5: einen Brennstoffzellenblock;
- FIG 6: einen Schnitt durch eine Brennstoffzelle;
- FIG 7: einen weiteren Schnitt durch eine Brennstoffzelle;
- FIG 8: einen weiteren Schnitt durch eine Brennstoffzelle;

Gleiche Gegenstände sind in den Figuren mit den gleichen Bezugszeichen versehen.

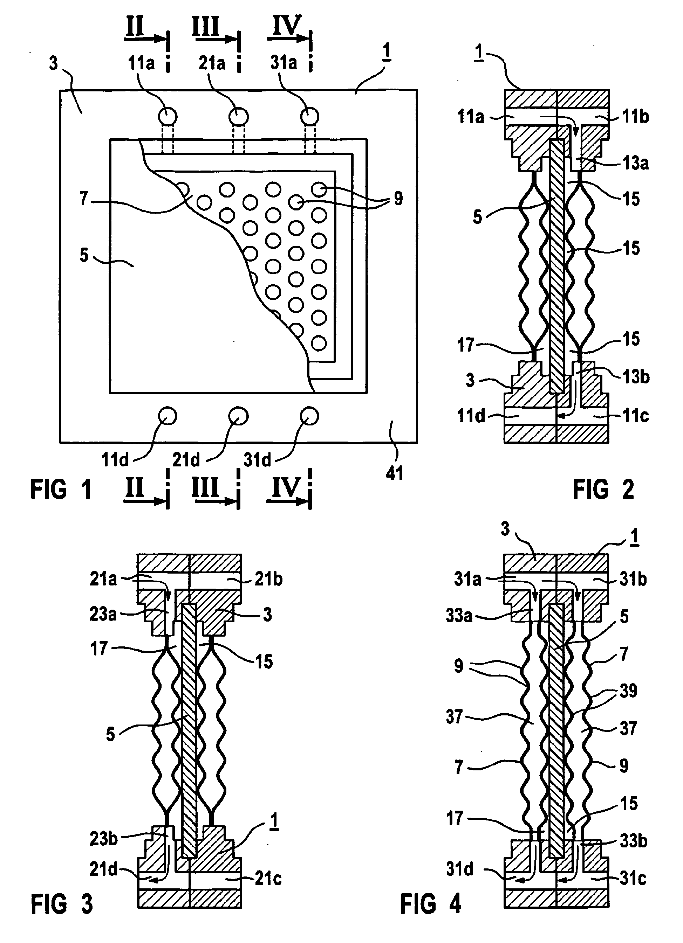

In Figur 1 ist in einer schematischen Draufsicht eine rechteckige und planare Befeuchtungszelle 1 dargestellt, die eine in einem Rahmen 3 eingebettete und aufgeschnitten dargestellte Membran 5 umfasst. Unter der Membran 5 ist ein Heizelement 7 angeordnet, welches in den Rahmen 3 eingefasst ist. Das Heizelement 7 weist eine Prägestruktur 9 auf, die in Form von runden Erhebungen bzw. Vertiefungen ausgestaltet ist. In den Rahmen 3 ist eine erste Axialkanalöffnung 11a eingebracht, durch die während des Betriebs der Befeuchterzelle 1 Befeuchtungswasser strömt.

Figur 2 zeigt einen Schnitt durch die Befeuchtungszelle 1 entlang des das Befeuchtungswasser führenden Axialkanals 11b. Während des Betriebs der Befeuchterzelle 1 strömt Befeuchtungswasser durch die erste Axialkanalöffnung 11a in den ersten Axialkanal 11b. Aus dem ersten Axialkanal 11b strömt es in einen ersten Radialkanal 13a in den Befeuchtungswasserraum 15 der Befeuchtungszelle 1. Während des Durchströmens des Befeuchtungswasserraums 15 streicht das Befeuchtungswasser entlang der wasserdurchlässigen Membran 5, wobei ein Teil des Befeuchtungswassers die Membran 5 durchdringt und in den Gasraum 17 der Befeuchtungszelle 1 gelangt. Das übrige Befeuchtungswasser strömt weiter in den zweiten Radialkanal 13b und gelangt anschließend in den ebenfalls Befeuchtungswasser führenden zweiten Axialkanal 11c. Durch die zweite Axialkanalöffnung 11d tretend verlässt das Befeuchtungswasser die Befeuchtungszelle 1 wieder.

Das zu befeuchtende Betriebsgas strömt während des Betriebs der Befeuchtungszelle 1 durch eine dritte Axialkanalöffnung 21a und gelangt somit in den in Figur 3 gezeigten dritten Axialkanal 21b. Von dort aus strömt das Betriebsgas jeweils durch die dritten Radialkanäle 23a in die Gasräume 17 der zu einem Befeuchtungszellenstapel zusammengefügten Befeuchtungszellen 1, von denen in den Figuren nur eine dargestellt ist. Im Gasraum 17 der Befeuchtungszelle 1 wird das Betriebsgas durch das durch die Membran 5 hindurchgetretene Befeuchtungswasser befeuchtet. Das befeuchtete Betriebsgas verlässt den Gasraum 17 durch den vierten Radialkanal 23b, tritt in den vierten Axialkanal 21c und verlässt die Befeuchtungszelle 1 durch die in den Figuren 1 und 3 gezeigte vierte Axialkanalöffnung 21d.

Figur 4 zeigt einen Schnitt durch die Befeuchtungszelle 1 entlang der Linie C-C und entlang des fünften Axialkanals 31b und sechsten Axialkanals 31c, durch die während des Betriebs der Befeuchtungszelle 1 Heizwasser strömt. Das Heizwasser wird durch die fünfte Axialkanalöffnung 31a in den fünften Axialkanal 31b geführt, von wo aus es in den fünften Radialkanal 33a und anschließend in den Heizwasserraum 37 des Heizelements 7 gelangt. Das Heizwasser durchströmt den Heizwasserraum 37 des Heizelements 7 und verlässt das Heizelement 7 nach Durchströmen des sechsten Radialkanals 33b, indem es in den sechsten Axialkanal 31c gelangt. Durch die sechste Axialkanalöffnung 31d strömend verlässt es die Befeuchtungszelle 1. Das Heizelement 7 umfasst zwei Metallbleche 39, zwischen denen der Heizwasserraum 37 angeordnet ist. Die beiden Metallbleche 39 weisen jeweils eine Prägestruktur 9 auf, durch die im Zusammenspiel mit der wasserdurchlässigen Membran 5 auf der einen Seite des Heizelements 7 der Befeuchtungswasserraum 15 und auf der anderen Seite des Heizelements 7 der Gasraum 17 einer benachbarten Befeuchtungszelle gebildet wird. Innerhalb des aus planaren Befeuchtungszellen 1 gebildeten Befeuchtungszellenstapels sind jeweils ein Heizelement 7 und eine Membran 5 abwechselnd aufeinander gestapelt, wobei sowohl die Membranen 5 als auch die Heizelemente 7 in ebenfalls aufeinander gestapelte Rahmen 3 aus einem elastomeren Dichtungsmaterial eingefasst sind. Im Befeuchtungszellenstapel sind somit in jeweils abwechselnder Reihenfolge nebeneinander angeordnet: eine wasserdurchlässige Membran 5, ein Befeuchtungswasserraum 15, ein Metallblech 39 eines Heizelements 7, ein Heizwasserraum 37, ein zweites Metallblech 39 eines Heizelementes 7, ein Gasraum 17, eine weitere Membran 5, usw.

Durch die Befeuchtung des durch den Gasraum 17 strömenden Betriebsgases mit dem durch die Membran 5 hindurchtretende Befeuchtungswasser wird die Membran 5 infolge des Verdampfungswärmeverlusts abgekühlt. Dieser Wärmeverlust schlägt sich jedoch nur in geringem Maße als Abkühlung des Betriebsgases nieder, da das Betriebsgas im Durchströmen des Gasraums 17 an einem Metallblech 39 des Heizelements 7 entlang strömt. Das Heizelement 7 wird während des Betriebs der Befeuchtungszelle 1 permanent von Kühlwasser aus den Brennstoffzellen 101 des Brennstoffzellenblocks 50 durchströmt und auf die Temperatur der Brennstoffzellen 101 aufgeheizt. Durch das Metallblech 39 wird Wärme aus diesem nun als Heizwasser fungierenden Kühlwasser auf das Betriebsgas übertragen, das den Gasraum 17 somit auf annähernd die Temperatur der Brennstoffzellen 101 aufgeheizt wieder verlässt. Es ist somit gewährleistet, dass das Betriebsgas während der Befeuchtung im Gasraum 17 so viel Wasser aufnehmen kann, dass die Elektrolytmembran der Brennstoffzellen 101, durch das es im weiteren Verlauf strömt, nicht austrocknet und somit nicht beschädigt wird. Hierdurch wird die Betriebsdauer der Brennstoffzellen 101 des Brennstoffzellenblocks 50 in erheblichem Umfang verlängert.

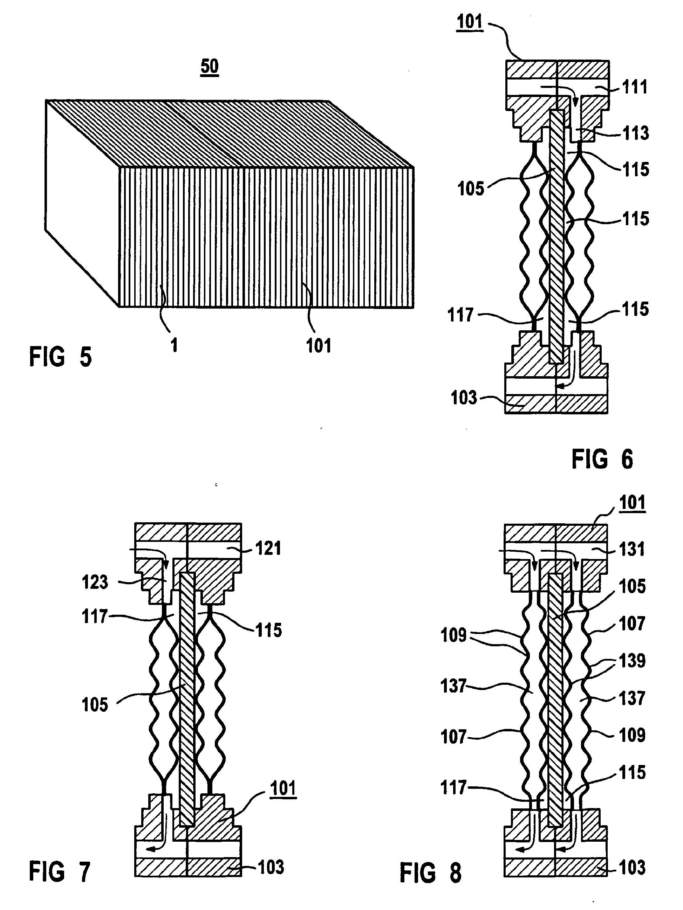

Figur 5 zeigt einen Brennstoffzellenblock 50 mit einem Stapel von aufeinander gestapelten planaren Brennstoffzellen 101 und einem dem Brennstoffzellenstapel benachbarten Stapel aus planaren Befeuchtungszellen 1. Die Brennstoffzellen 101 des Brennstoffzellenstapels 50 haben einen analogen Aufbau wie die Befeuchtungszellen 1 des Befeuchtungszellenstapels des Brennstoffzellenblocks 50.

Die Figuren 6, 7 und 8 zeigen jeweils einen Schnitt durch eine Brennstoffzelle 101 des Brennstoffzellenblocks 50, wobei die Schnitte durch die Brennstoffzelle 101 in analoger Weise wie die Schnitte durch die Befeuchtungszelle 1 in den Figuren 2, 3 und 4 angeordnet sind.

Die Brennstoffzelle 101 umfasst ein eine Membran enthaltende Elektrolyt-Elektroden-Einheit 105 sowie jeweils eine an den beiden flachen Seiten der Elektrolyt-Elektroden-Einheit 105 angeordnetes Kühlelement 107. Das Kühlelement 107 umfasst - analog wie das Heizelement 7 der Befeuchtungszelle 1 - zwei Metallbleche 139, die jeweils eine Prägestruktur 109 aufweisen. Die beiden Metallbleche 139 umschließen einen Kühlwasserraum 137, durch den während des Betriebs der Brennstoffzelle 101 Kühlwasser zum Kühlen der Brennstoffzelle 101 strömt. Die Prägestruktur 109 der Brennstoffzelle 101 bildet in Verbindung mit der Elektrolyt-Elektroden-Einheit 105 beidseitig benachbart dieser Einheit 105 einen ersten Gasraum 115 und einen zweiten Gasraum 117 aus. Während des Betriebs der Brennstoffzelle 101 strömt ein sauerstoffhaltiges erstes Betriebsgas durch einen Axialkanal 111 und einen Radialkanal 113 in den ersten Gasraum 115 und ein wasserstoffhaltiges zweites Betriebsgas durch den in Figur 7 gezeigten Axialkanal 121 und einen Radialkanal 123 in den zweiten Gasraum 117 der Brennstoffzelle 101. In analoger Weise, wie das Heizwasser durch das Heizelement 7 der Befeuchtungszelle 1 strömt, strömt auch das Kühlwasser durch das Kühlelement 107 der Brennstoffzelle 101.

Das Kühlelement 107 der Brennstoffzelle 101 ist in Aufbau und Form mit dem Heizelement 7 der Befeuchtungszelle 1 identisch. Sowohl das Heizelement 7 wie auch das Kühlelement 107 umfasst zwei einen Wasserraum 37 bzw. 137 bildende Metallbleche 39 bzw. 139, die jeweils eine Prägestruktur 9 bzw. 109 aufweisen. Die Metallbleche 39 und die Metallbleche 139 sind aus den gleichen Materialien gefertigt, wobei jedoch das Kühlelement 107 an seinen beiden Außenseiten eine zusätzliche metallische Beschichtung aus Gold aufweist. Diese metallische Beschichtung dient der elektrischen Kontaktierung zwischen dem Kühlelement 107 und der Elektrolyt-Elektroden-Einheit 105. Da innerhalb einer Befeuchtungszelle eine solche elektrische Kontaktierung nicht notwendig ist, kann bei der Herstellung des Heizelements 7 auf eine solche zusätzliche metallische Beschichtung verzichtet werden. Ebenso wie die Befeuchtungszelle 1 umfasst auch die Brennstoffzelle 101 einen Rahmen 103 aus einem elastomeren Dichtungsmaterial, in den sowohl das Kühlelement 107 als auch die Elektrolyt-Elektroden-Einheit 105 entlang ihrer Schmalseiten eingebettet ist. Die Rahmen 3 und 103 der Befeuchtungszelle 1 bzw. der Brennstoffzelle 101 sind aus dem gleichen Elastomer hergestellt. Auch die äußere Form und die äußeren Abmessungen der Rahmen 3 bzw. 103 sind gleich, so dass auch die Form und die Abmessungen der Befeuchtungszelle 1 identisch sind mit denen der Brennstoffzelle 101. Die wasserdurchlässige Membran 5 in der Befeuchtungszelle 1 ist aus dem gleichen Material wie der Elektrolyt innerhalb der Elektrolyt-Elektroden-Einheit 105 der Brennstoffzelle 101, beispielsweise aus einem Polymer wie z.B. NAFION der Firma DuPont aus Wilmington, Delaware.

Durch die Verwendung gleicher Materialien, Formen und Größen für Elemente sowohl der Befeuchtungszelle 1 wie auch der Brennstoffzelle 101 ist die Herstellung einer Befeuchtungszelle 1 sehr einfach, schnell und preisgünstig zu bewerkstelligen. Außerdem vereinfacht sich durch die Ähnlichkeit der Befeuchtungszelle 1 mit der Brennstoffzelle 101 die Planung und die Konstruktion eines Brennstoffzellenblocks 50. Ein weiterer Vorteil ist, dass Brennstoffzellenblöcke mit gleichartiger Auslegung von Befeuchtungszelle und Brennstoffzelle sehr einfach und flexibel zu planen und auszuführen sind, wodurch der Hersteller des Brennstoffzellenblocks sehr flexibel und kundenorientiert arbeiten kann.

## Patentansprüche

1. Brennstoffzellenblock (50) mit einem Stapel planarer Brennstoffzellen (101) und einem Stapel planarer Befeuchtungszellen (1), wobei die Befeuchtungszellen (1) jeweils einen Gasraum (17), einen Befeuchtungswasserraum (15) und eine zwischen den beiden Räumen angeordnete wasserdurchlässige Membran (5) umfassen,
**dadurch gekennzeichnet, dass** jede der Befeuchtungszellen (1) ein dem Gasraum (17) benachbartes planares Heizelement (7) umfasst, wobei das Heizelement (7) zwischen dem Gasraum der Befeuchtungszelle (1) und dem Befeuchtungsraum einer dieser Befeuchtungszelle (1) benachbarten Befeuchtungszelle angeordnet ist und das Heizelement (7) zwei Metallbleche (39) umfasst, zwischen denen ein Heizwasserraum (37) angeordnet ist.

2. Brennstoffzellenblock (50) nach Anspruch 1,
**dadurch gekennzeichnet, dass** eines der Metallbleche (39) den Gasraum (17) bildende und das andere der Metallbleche (39) den Befeuchtungswasserraum (15) bildende Prägestrukturen (9) aufweist.

3. Brennstoffzellenblock (50) nach einem der vorhergehenden Ansprüche, **dadurch gekennzeichnet,**
**dass** die Brennstoffzellen (101) jeweils ein Kühlelement (107) umfassen, wobei das Kühlelement (107) in Aufbau und Form mit dem Heizelement (7) identisch ist.

4. Brennstoffzellenblock (50) nach einem der vorhergehenden Ansprüche, **dadurch gekennzeichnet,**
**dass** das Heizelement (7) und das Kühlelement (107) aus einem oder mehreren gleichen Materialien bestehen, wobei das Kühlelement (107) gegenüber dem Heizelement (7) eine zusätzliche metallische Beschichtung aufweist.

5. Brennstoffzellenblock (50) nach einem der vorhergehenden Ansprüche, **dadurch gekennzeichnet,**
**dass** die äußere Form und die äußeren Abmessungen der Brennstoffzellen (101) identisch sind mit denjenigen der Befeuchtungszellen (1).

6. Brennstoffzellenblock (50) nach einem der vorhergehenden Ansprüche, **dadurch gekennzeichnet,**
**dass** das Heizelement (7) und das Kühlelement (107) von jeweils einem Rahmen (3, 103) aus gleichem Material eingefasst sind.

## Claims

1. A fuel cell block (50) having a stack of planar fuel cells (101) and a stack of planar humidification cells (1), the humidification cells (1) each comprising a gas space (17), a humidification water space (15) and a water-permeable membrane (15) arranged between the two spaces, **characterized in that** each of the humidification cells (1) comprises a planar heating element (7) which adjoins the gas space (17), the heating element (7) being arranged between the gas space of the humidification cell (1) and the humidification space of a humidification cell which adjoins this humidification cell (1), and the heating element (7) comprising two metal sheets (39), between which there is arranged a heating water space (37).

2. The fuel cell block (50) as claimed in claim 1, **characterized in that** one of the metal sheets (39) has stamped structures (9) which form the gas space (17), and the other of the metal sheets (39) has stamped structures (9) which form the humidification water space (15).

3. The fuel cell block (50) as claimed in one of the preceding claims, **characterized in that** the fuel cells (101) each comprise a cooling element (107), the structure and shape of the cooling element (107) being identical to those of the heating element (7).

4. The fuel cell block (50) as claimed in one of the preceding claims, **characterized in that** the heating element (7) and the cooling element (107) consist of one or more identical materials, with the cooling element (107) having an additional metallic coating compared to the heating element (7).

5. The fuel cell block (50) as claimed in one of the preceding claims, **characterized in that** the external shape and the external dimensions of the fuel cells (101) are identical to those of the humidification cells (1).

6. The fuel cell block (50) as claimed in one of the preceding claims, **characterized in that** the heating element (7) and the cooling element (107) are in each case surrounded by a frame (3, 103) made from the same material.

## Revendications

1. Bloc ( 50 ) de piles à combustible, comprenant un empilement de piles ( 101 ) à combustible plates et un empilement de piles ( 1 ) d'humidification plates, les piles ( 1 ) d'humidification comprenant respectivement un espace ( 17 ) pour du gaz, un espace ( 15 ) pour de l'eau d'humidification et une membrane ( 5 ) perméable à l'eau interposée entre les deux espaces,
**caractérisé en ce que** chacune des piles ( 1 ) d'humidification comprend un élément ( 7 ) chauffant plan, voisin de l'espace ( 17 ) pour du gaz, l'élément ( 7 ) chauffant étant interposé entre l'espace pour du gaz de la cellule ( 1 ) d'humidification et l'espace d'humidification d'une cellule d'humidification voisine de cette cellule ( 1 ) d'humidification et l'élément ( 7 ) chauffant comprenant deux tôles ( 39 ) métalliques entre lesquelles est disposé un espace ( 37 ) pour de l'eau de chauffage.

2. Bloc ( 50 ) de piles à combustible suivant la revendication 1,
**caractérisé en ce que** l'une des tôles ( 39 ) métalliques formant l'espace ( 17 ) pour du gaz et l'autre des tôles ( 39 ) métalliques formant l'espace ( 15 ) pour de l'eau d'humidification a des structures ( 9 ) imprimées.

3. Bloc ( 50 ) de piles à combustible suivant l'une des revendications précédentes,
**caractérisé en ce que** les piles ( 101 ) à combustible comprennent respectivement un élément ( 107 ) de refroidissement, l'élément ( 107 ) de refroidissement étant de structure et de forme identiques à l'élément ( 7 ) chauffant.

4. Bloc ( 50 ) de piles à combustible suivant l'une des revendications précédentes,
**caractérisé en ce que** l'élément ( 7 ) chauffant et l'élément ( 107 ) de refroidissement sont constitués d'un ou de plusieurs matériaux semblables, l'élément ( 107 ) de refroidissement ayant, par rapport à l'élément ( 7 ) de chauffage, un revêtement métallique supplémentaire.

5. Bloc ( 50 ) de piles à combustible suivant l'une des revendications précédentes,
**caractérisé en ce que** la forme extérieure et les dimensions extérieures des piles ( 101 ) à combustible sont identiques à celles des piles ( 1 ) d'humidification.

6. Bloc ( 50 ) de piles à combustible suivant l'une des revendications précédentes,
**caractérisé en ce que** l'élément ( 7 ) chauffant et l'élément ( 107 ) de refroidissement sont enchâssés respectivement dans un cadre ( 3, 103 ) en le même matériau.
